# EUROPEAN PATENT APPLICATION

(11) **EP 4 557 218 A1**
(43) Date of publication of application: **21.05.2025**
(21) Application number: 23209745.1
(22) Date of filing: 14.11.2023
(51) Int. Cl.: G06T 7/32, G06T 7/30

(54) **METHOD AND SYSTEM FOR PROCESSING IMAGE DATA USING AN AI SYSTEM**

(71) Applicant: Olympus Winter & Ibe GmbH, 22045 Hamburg (DE)
(72) Inventor: STREPPEL, Merle, 22045 Hamburg (DE); SUPPA, Per, 22045 Hamburg (DE); ENDERS, Borg, 22045 Hamburg (DE)
(74) Representative: Weickmann & Weickmann PartmbB

(57) **Abstract**

A method and a system for processing image data are provided, in which source data from images acquired by a camera viewing an object, and target data obtained from an alternative imaging modality applied to the same object, are processed to obtain a correlation between the source data and the target data. The correlation may be a point cloud registration (PCR) between a source point cloud defined by the source data and a target point cloud defined by the target data. An AI system is used to preprocess the source data and/or the target data before processing of the data to obtain the correlation, in order to increase an efficiency of the method/system, in particular accelerate the PCR and/or increase its registration accuracy.

## Description

The present invention relates to a method and a system for processing image data, in particular source data obtained from images acquired by a camera viewing an object, and target data related to the object, such as to obtain a correlation between the source data and the target data.

It is a usual requirement in endoscopic imaging to enrich images taken by an endoscopic camera with anatomical information of the object under examination (for example an organ such as liver, lung, colon, rectum, kidney, pancreas, etc.). The anatomical information may be provided in the form of another image of the object obtained prior to the endoscopic examination by using an alternative imaging modality such as computer tomography (CT) or magnetic resonance imaging (MRI). The image obtained from the alternative imaging modality may then be overlaid onto the image taken by the endoscopic camera such as to add valuable information to the camera image which facilitates medical analysis. In another conventional application, an augmented reality (AR) device is used to display video images acquired by an endoscopic camera, wherein anatomical information is overlaid onto the endoscopic video image.

In order to correctly position the image acquired by the camera and the additional information obtained through the alternative imaging modality relatively to one another for joint display, a positional correlation needs to be found between points (source points) within the image acquired by the camera and corresponding points (target points) within the image obtained from the alternative imaging modality. Such correlation is usually found by a point cloud registration (PCR) process, in which a source point cloud containing the source points and a target point cloud containing the target points are processed such as to find a transformation matrix allowing to align the source point cloud with the target point cloud. As a result, PCR achieves a fusion of the information obtained by the endoscopic camera with information obtained from the alternative imaging modality.

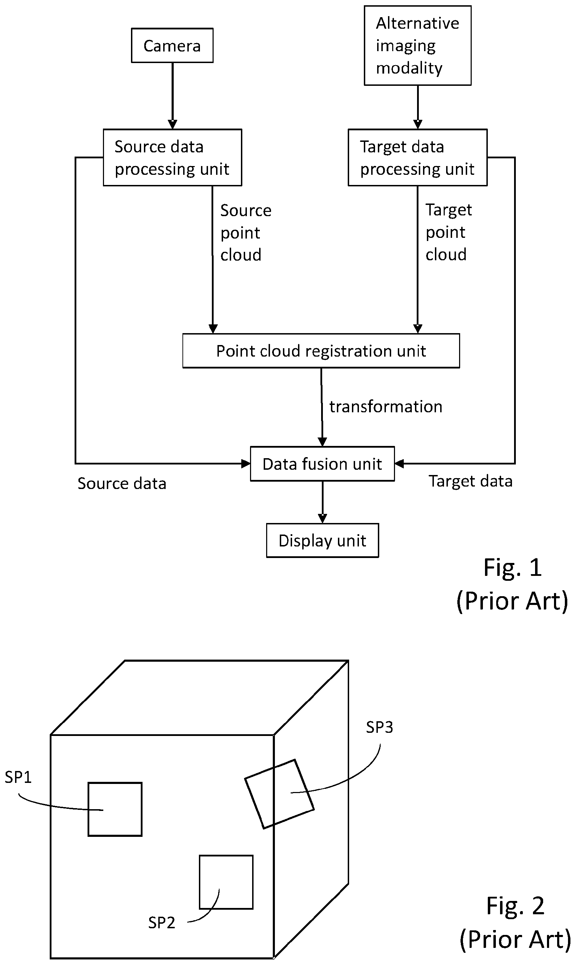

Fig. 1 shows a conventional PCR pipeline using a source point cloud obtained from a camera image and a target point cloud obtained from a CT scan, an MRI scan or any alternative imaging modality as the inputs. Source point cloud and target point cloud are input into a point cloud registration unit which aims to identify the position of the target point cloud on the source point cloud. To achieve this, in a conventionally known PCR algorithm, a feature descriptor is applied to both the target point cloud and the source point cloud to assign a fingerprint to each individual point within these point clouds which, in the best case, provides a unique description of each point, such that each point becomes distinguishable from all other points. Subsequently, in a feature-matching step of the algorithm, the feature descriptor of each point of the target point cloud is used to identify the corresponding points with the most similar feature descriptors on the source point cloud. Corresponding points can then be used to estimate a transformation (e.g., a transformation matrix) between the source point cloud and the target point cloud. Based on that transformation, a data fusion unit may then transform, align, and overlay the source point cloud and the target point cloud to generate a fused image for display on a display unit.

The feature matching component is a critical part of any registration pipeline and aims to find the correct corresponding points in the source and target point cloud. For instance, at least three corresponding point pairs need to be identified in both point clouds to facilitate an accurate rigid registration result. Based on these three points a transformation matrix can be calculated that subsequently can be used to align the source and the target point cloud. The most often used algorithm for feature matching is the Random Sample Consensus (RANSAC) approach or one of its derivates which is disclosed, e.g., in Fischler et al. (Martin A. Fischler and Robert C. Bolles, 1981, "Random sample consensus: a paradigm for model fitting with applications to image analysis and automated cartography", Commun. ACM 24, 6 (June 1981), 381-395). This approach is an iterative method that randomly samples points from the source and target point cloud and aims to match these points with the most likely corresponding points within the sampled points from the target point cloud. The correspondences are then used to estimate a transformation matrix. An accuracy metric is then used to determine if the estimated transformation matrix leads to a higher accuracy compared to the estimates from the previous iterations. The iterative process is repeated until a termination criterion is reached.

Although, RANSAC-based approaches provide accurate results, the iterative process renders their performance rather slow. Moreover, inaccurate results can be achieved based on the selection of wrong corresponding point pairs leading to false registration results. That, in turn, limits its use for real-time applications in surgical or endoscopic procedures. Another drawback of conventional PCR algorithms derives from the limited field of view provided by the endoscopic camera during the procedure. Only a partial small patch of the organ surface is usually seen in the endoscope that can be reconstructed as source point cloud. In general, this means that the smaller the patch size, the higher the likelihood of having ambiguous solutions for the selection of corresponding points. As illustrated in Fig. 2, in some cases, a result is found to be apparently accurate, even though it is based on the selection of wrong corresponding points, subsequently leading to a false registration result. To circumvent the above stated problem, commercially implemented PCR and feature matching algorithms require user interaction to select corresponding point pairs from both, the source point cloud and the target point cloud. Nevertheless, this approach is rather inaccurate, in particular when used for registration in soft-tissue applications, such as abdominal surgery.

In view of the above circumstances, it is an object of the present invention to provide a method and a system for processing image data, which address the above described problems of the prior art and allow a fast and reliable registration between source data and target data, such that the efficiency of the registration process can be increased.

According to a first aspect of the present invention, the above object is achieved by a method for processing image data, comprising the steps of providing source data from images acquired by a camera viewing an object, providing target data related to the object, operating an AI system comprising at least one artificial neural network, wherein the source data are used as an input of the AI system, and wherein the AI system is trained to identify a first correlation between the source data and the target data, and processing the source data and the target data based on the first correlation to obtain a second correlation between the source data and the target data.

According to an important idea of the present invention, an artificial intelligence system (AI system) is used to find a first correlation between the source data and the target data and to use that first correlation for more efficiently and/or more accurately finding a second correlation between the source data and the target data. The target data and the source data may therefore be aligned to one another more quickly or more accurately, which allows effective fusion of the information obtainable from the source data with information obtainable from the target data.

In particular, according to the present invention, the AI system is trained to identify (predict) the first correlation between the source data and the target data. The training of the AI system may be carried out using a plurality of different training data sets, each training data set comprising a source data set obtained from at least one image acquired by a training camera viewing an object, a target data set related to the object, and a first correlation between the source data set and the target data set. The trained AI system may then be used as described above to identify the first correlation on the basis of new, unseen source data obtained from images acquired by the camera viewing a new, unseen object, in particular without requiring target data in this step of the method.

In an embodiment of the present invention, the second correlation defines a spatial relation between the source data and the target data, wherein the spatial relation describes at least one spatial transformation between at least a portion of the source data and at least a portion of the target data, wherein the transformation is at least one of or a combination of a translation, a rotation, a reflection and a deformation. The second correlation can therefore be used to align positional information between source data and target data, in particular to register a source point cloud described by the source data with a target point cloud described by the target data. Positional information of the source data and the target data may therefore be merged.

Once the second correlation has been found, one or more points or areas within the images acquired by the camera, which provide the basis for the source data, may be annotated, interpreted, supplemented or otherwise combined with information taken from the target data, which were obtained (through alternative imaging) for the same points or areas of the same object. In a particular example, such a combination may be implemented by overlaying an image corresponding to at least a portion of the source data (in particular at least a portion of the image acquired by the camera) with an image that is obtained from the spatial transformation of at least the portion of the target data. In other words, images of the same portion of the same object, obtained from the camera on the one hand and from an alternative imaging modality on the other hand, may be aligned and displayed in an overlaid manner.

A spatial translation may be required in order to align the source data with the target data, in particular to register the source point cloud with the target point cloud, because source data and target data are obtained from different measurements using different imaging modalities, different perspectives, viewing angles, etc. In addition, the object itself, in particular an organ, may change in shape, for example due to transformation of soft-tissue organs due to inflation, patient positioning, mechanical impact during surgery, etc., such that the spatial transformation between the source data and the target data may include a deformation based on an actual deformation of the object from a pre-operative imaging to intra-operative imaging. Furthermore, a deformation component within the spatial transformation may originate from a difference in the measuring areas or range of vision of the camera on the one hand and the alternative imaging modality on the other hand.

In another embodiment of the present invention, the source data relate to a portion of the object observed by the camera, wherein the target data relate to a target area which is larger than the observed portion and includes the observed portion, wherein the AI system is trained to identify the first correlation as describing a position (in particular a positional estimate) of the observed portion within the target area. Thus, the camera may observe just a smaller portion (e.g. a smaller surface patch) of the object within the field of view of the camera, wherein the target data may be obtained through alternative imaging modality for a larger area of the object or for the entire object, and the AI system may be trained to predict a rough position of the smaller observed portion of the source data within the larger target area of the target data. Afterwards, the predicted position of the source data within the target data may be used to accelerate searching for the second correlation, for example by reducing the solution space through cropping of the target data as will be described later in more detail. The likelihood of finding a correct transformation, in particular corresponding point pairs between the target point cloud and the source point cloud, within a short amount of time may thus be increased.

The first correlation as identified by the AI system may include specific positional information, such as coordinates, of the observed portion within the target area. However, the effects of the present invention to increase speed and accuracy of finding the second correlation are achieved already by using an AI system trained to classify source data with respect to their position within the target area, or if the AI system is trained to provide only a rough positional estimate. In a simple embodiment, two classes would be sufficient for an effective classification, for example left versus right, upper versus lower. Furthermore, three or more classes could be defined based on a segmentation of the object, i.e. the AI system could identify the source data as corresponding to a particular segment X in the target data of an organ. Furthermore, combinations of such classifications could be conceived.

Based on the first correlation, in particular the classification of the source data as determined by the AI system, the step of processing the source data and the target data to obtain the second correlation preferably includes defining a crop region within the target area, the crop region extending around the position of the observed portion (or around an area that corresponds the observed portion when the observed portion is positioned in the target area according to the first correlation), and processing the target data of the crop region and the source data to obtain the second correlation. Accordingly, based on the first correlation, the target data are cropped by removing any data corresponding to positions outside a crop region that includes the observed portion of the source data. Therefore, the target data are effectively reduced in size and the search space or solution space for finding the second correlation is reduced.

For actively finding the first correlation, the AI system may be trained to recognize the presence of an object feature within at least one of the source data and the target data, and to determine positions of the object feature within both, the coordinate system of the source data and the coordinate system of the target data. The object feature may be represented by visible features (points, groups of points or areas) within the images that represent the source data and the target data, respectively, i.e., visible features suitable for allowing the AI system to determine that they belong to the same object feature of the object under examination. For example, an area in which different vessels of an organ meet could form an object feature in the sense of the present invention, which can give rise for a visible feature within the image representing the source data as well as another visible feature within the image representing the target data. The AI system may be trained to recognize both visible features within the images of the source data and the target data, respectively, and to identify, based on a similarity between the two visual features, that both visual features correspond to the same object feature of the object.

The object feature may be a visible structural feature of the object that results in a visual feature recognizable (distinguishable from other visual features) within the images of the source data and the target data. Alternatively, the object feature may be a dye marking artificially applied to the object to mark points, areas or structures within the organ and to enable or enhance visibility of that feature or area of the organ within the image representing the source data as well as the image representing the target data.

In another embodiment of the present invention, the source data may include spatial coordinates of a plurality of source points defining a source point cloud, the target data may include spatial coordinates of a plurality of target points defining a target point cloud, and the step of processing the source data and the target data to obtain the second correlation may include a point cloud registration which estimates a transformation matrix between at least a portion of the source point cloud and at least a portion of the target point cloud, the point cloud registration preferably using a feature matching algorithm. The method of this embodiment may therefore achieve an alignment between three-dimensional source data and three-dimensional target data to achieve a fusion of information from target data with information from source data. The transformation matrix may be a mathematical matrix or any other algorithm or formula defined to calculate, for each point within the source point cloud, the coordinates of the corresponding point within the target point cloud, or, vice versa, to calculate for each point within the target point cloud, the coordinates of the corresponding point within the source point cloud.

The point cloud registration preferably uses a feature matching algorithm, for example an algorithm as described above, which recognizes and matches visible features within the images of the target data and the source data, respectively, that correspond to the same object feature. The point cloud registration as such, in particular the feature-matching algorithm as such, may be of conventional nature for example as described by Robu et al. (Robu MR, Ramalhinho J, Thompson S, Gurusamy K, Davidson B, Hawkes D, Stoyanov D, Clarkson MJ., "Global rigid registration of CT to video in laparoscopic liver surgery", Int J Comput Assist Radiol Surg. 2018 Jun; 13(6): 947-956).

In a further embodiment of the present invention, the target data are obtained from an imaging modality applied to the object, in particular computer tomography (CT) and/or magnetic resonance imaging (MRI). Such imaging modalities are established to deliver comprehensive three-dimensional data (target point clouds) through a non-invasive measurement. The measurement principles are different from visual observation through a camera and therefore can provide valuable additional information about the object.

In a further embodiment of the present invention, the source data and the target data are processed for two-dimensional or three-dimensional display such as to be viewed by a user, preferably by using an augmented reality device, wherein the source data and the target data are preferably displayed as being overlaid onto one another based on the second correlation. A two- or three-dimensional display of the source data and the target data allow for direct observation of the object by a user viewing the display, wherein information from both the camera image and the alternative imaging modality can be displayed simultaneously. Even more comprehensive information can be displayed using three-dimensional displays such as head-mounted stereoscopic displays (3D glasses) achieving a realistic or near-realistic immersive viewing experience for the user.

In a further embodiment, the source data may be processed for two-dimensional or three-dimensional display, such as to be viewed by a user as a source image, and the target data may be displayed to the user based on the second correlation, however not in the form of an image but in the form of one or more markings (annotations, highlighted areas, or other visible features) which are computer-generated and set to positions within the source image that depend on the second correlation. For example, computer-generated labels may be attached to certain points or areas of the source image, or portions of an organ may be highlighted in the source image. It should be noted that the source image may be identical to the image acquired by the camera and processing the source data for display may include transmitting or forwarding the images acquired by the camera without modification.

According to a second aspect of the present invention, the above object is achieved by a system for processing image data comprising a camera adapted to acquire images of an object, a source data processing unit adapted to provide source data based on the images acquired by the camera, a target data processing unit adapted to provide target data related to the object, and an AI system adapted to accept the source data as an input, wherein the AI system comprises at least one artificial neural network trained to identify a first correlation between the source data and the target data, wherein the system further comprises a registration unit adapted to process the source data and the target data based on the first correlation to obtain a second correlation between the source data and the target data.

By using a system according to the second aspect of the invention, it is possible to achieve the technical effects described above for a method of the first aspect of the invention (including the above-described embodiments). In particular, a system of the second aspect of the present invention may be configured to carry out a method according to the first aspect of the invention, including one or more of the above-described embodiments. More particularly, certain units or components of embodiments of the system according to the second aspect of the invention are described in dependent claims and achieve the same or similar effects as the corresponding method steps described above for embodiments of the first aspect of the invention.

In a further embodiment of the present invention, the display device may be an augmented reality device adapted for real-time display of the source data according to the images acquired by the camera, wherein the augmented reality device may further be adapted to display target data information obtained from the target data as being overlaid onto the source data. Real-time display of the source data allows a user to continuously follow changes of the source data and thus recognize time-dependent information in real-time. In particular, if the source data displayed by the augmented reality device are equal to or correspond to the images acquired by the camera, the user may observe a live stream of the images of the object and therefore continuously observe movements of the objects or movements of the camera with respect to the object. Furthermore, if the augmented reality device is adapted to process the source data in real-time, i.e. to find the first correlation as well as the second correlation in real-time, target data information may be obtained from the target data associated to the current source data and may be displayed in real-time on the same display, in particular as being overlaid onto the current source data.

The term "real-time" herein refers to a time delay or latency that is small enough to allow a continuous and uninterrupted use of the system by a user, i.e. a time delay or latency that is either not noticeable for the user or is noticeable but still allows continuous operation such as if there was no time delay or latency. For example, "real-time" may refer to a time delay or latency smaller than 5 seconds, preferably smaller than 1 second, more preferably smaller than 500 milliseconds.

In particular, the system of the second aspect of the invention is preferably configured such that a time delay between a first point in time at which the camera acquires a particular image of an object, and a second point in time at which the registration unit obtains a second correlation between source data provided based on the particular image, and target data, is smaller than 5 seconds, preferably smaller than 1 second, more preferably smaller than 500 milliseconds. Such a system does not only allow a real-time display of the camera image but also a real-time display of associated target information overlaid onto the current source data. A user may therefore directly recognize target information pertinent to the live camera images, wherein the target data information is displayed at suitable positions within the camera images.

In a further embodiment of the second aspect of the invention, the system may be an endoscope-imaging system and the camera may be an endoscope camera adapted to be mounted to an endoscope. Implementation of the system as an endoscope-imaging system opens a wide range of applications for observing complex objects or objects which are difficult to access, for example cavities, interior regions of objects, in particular tissue. The system may then further be configured for gastrointestinal and surgical interventions of the human body.

A system of the second aspect of the invention may be configured such as to carry out a method of the first aspect of the invention, in particular a method according to at least one of claims 1 to 8, in order to achieve the same or corresponding effects as discussed above for the first aspect of the invention.

According to a third aspect of the present invention, the above object is achieved by a computer program product configured to carry out, when run on a computer, a method according to the first aspect of the present invention, in particular according to the embodiments of the first aspect of the invention as described above. The computer program product may in particular comprise instructions for providing source data from images acquired by a camera viewing an object, for providing target data related to the object, and for providing and/or operating an AI system comprising at least one artificial neural network, wherein the source data are used as an input of the AI system, and wherein the AI system is trained to identify a first correlation between the source data and the target data. The computer program product may in further comprise instructions for processing the source data and target data based on the first correlation to obtain a second correlation between the source data and the target data. Such a computer program product provides functions and effects as described above for the method of the first aspect of the present invention. A computer program product of the third aspect of the invention may in particular be suitable to run on a computer that forms part of the system of the second aspect of the invention, such as to provide functions and effects as described above for the second aspect of the invention.

According to a fourth aspect of the present invention, there is provided a method for training an AI system comprising at least one artificial neural network, wherein the method comprises the steps of providing a plurality of different training data sets, each training data set comprising a source data set obtained from at least one image acquired by a camera viewing an object, a target data set related to the object, and a first correlation between the source data set and the target data set, and training the AI system by inputting the training data sets into the AI system. Such a method may be implemented as a supervised machine-learning algorithm in which the first correlation is used as a classification of the source data with respect to a relationship to associated target data. This classification is preferably a positional classification. In particular, the source data preferably represent a source point cloud obtained from the camera image and the target data preferably represents a target point cloud obtained from an alternative imaging modality of the same object, and the first correlation preferably corresponds to a classification of a position of the source point cloud within the target point cloud.

In an embodiment of the invention, classification is made on a finite number of classes (for example less than 20 classes, preferably less than 8 classes), such as to specify a rough position (for example left, right, lower, upper) and/or a type of the object (for example one of a predefined number of organs). For preparing the training data sets, a particular first correlation between a particular source data set and a particular target data set, i.e., the correct positional classification of the source point cloud within the target point cloud, may be given manually by a user who is training the AI system (manual classification) or by using historical data, which include established findings or measured results for correlations between source data and target data. The AI system trained in such a manner is then able to predict the first correlation based on new, unseen source data.

Preferred embodiments of the present invention will now be described in more detail with reference to the accompanying drawings, in which
- Fig. 1: shows a schematic illustration of a conventional point cloud registration pipeline,
- Fig. 2: shows a schematic illustration of the problem of ambiguous solutions in conventional point cloud registration pipelines,
- Fig. 3: shows a schematic illustration of a system for processing image data according to a first embodiment of the invention,
- Fig. 4: shows a schematic illustration of an operation of an AI system according to the first embodiment of the invention,
- Fig. 5: shows a comparison between the registration performance of the system according to the first embodiment of the invention and a comparative example, and
- Fig. 6: shows a schematic illustration of a system for processing image data according to a second embodiment of the present invention.

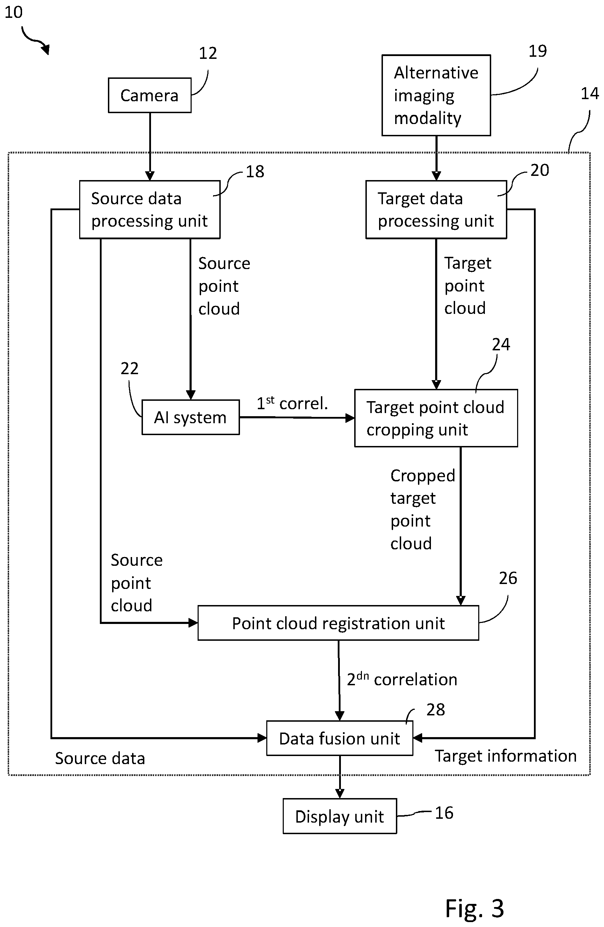

Fig. 3 shows a system 10 for processing image data according to a first embodiment of the present invention. System 10 comprises a camera 12 connected or connectable to a computing device 14 configured to process images acquired by camera 12 viewing an object (not shown). System 10 may further comprise a display unit 16 for displaying results of the processing of computing device 14.

Camera 12 may be any suitable image-capturing means capable of acquiring two-dimensional or three-dimensional images of an object. For example, a white light or narrow band visible light or infrared light camera may be used, comprising a CCD array for detecting light reflected or emitted by the object.

Display unit 16 may be any means for visually presenting information, in particular two-dimensional or three-dimensional images, to a user. Display unit 16 may for example be a computer screen, tablet screen or a head-mounted screen (head-mounted device). In particular, a head-mounted device may be implemented in the form of 3D glasses comprising two displays to be viewed by the left and right eyes of a user, respectively, allowing presentation of three-dimensional images (stereo images).

Computing device 14 may be implemented by one or more computers comprising at least a processor, storage means for volatile and/or non-volatile storage of data, input means for accepting a user input, for example through a keyboard and/or a mouse (not shown), and connectivity means for connecting computing device 14 to periphery devices such as the camera 12 and the display unit 16, and/or for connecting computing device 14 to a local network and/or to a remote network, such as the Internet. Preferably, computing device 14 is equipped with one or more processors specifically configured and optimized to host and run one or more neural networks, for example at least one deep learning processor (DLP) specialized for running learning algorithms, or at least one AI accelerator, in order to provide high efficiency and, in particular, real-time AI processing within computing device 14.

Computing device 14 may comprise a source data processing unit 18 adapted to process data, in particular images, obtained from camera 12 such as to provide source data corresponding to the images acquired by camera 12. The source data may simply be the camera images as such (in this case the camera images are just passed through source data processing unit 18 without modification), or may be a source point cloud, preferably a three-dimensional source point cloud, which includes the spatial coordinates of a plurality of source points obtained from the camera images. For example, source data processing unit 18 may combine depth information acquired by camera 12 viewing an object with two-dimensional images acquired by camera 12 at the same time, to generate a three-dimensional source point cloud.

Source data processing unit 18 may in particular be configured to process live (video) images from camera 12, i.e. update the source point cloud in real-time according to the camera images. The source point may therefore corresponds to what the camera 12 is currently viewing.

Computing device 14 is further configured to receive or store target data of the same object as viewed by camera 12, said target data preferably being obtained through an alternative imaging modality 19, for example through computer tomography (CT) and/or magnetic resonance imaging (MRI). Alternatively, the target data may be a model, in particular a three-dimensional model, of the object that is pre-stored within computing device 14.

Target data processing unit 20 of computing device 14 may be configured to process the target data and to obtain therefrom a target point cloud defined by spatial coordinates of a plurality of target points. In addition or alternatively, target data processing unit may output other data related to the object in the form of target information, for example labels, annotations, meta data or other information.

In the present embodiment, computing device 14 has an AI system 22, which may be any suitable machine learning module and may in particular comprise at least one trained neural network. AI system 22 may comprise at least one dedicated processor, for example a deep learning processor (DLP) specialized for running learning algorithms, or a general purpose microprocessor, which may host the at least one neural network. Alternatively, AI system 22 may be implemented as a physical or virtual part of any other processing unit of computing device 14, which runs other processes as well, for example image processing.

In the present embodiment, AI system 22 includes a deep learning network trained to classify a source point cloud input to AI system 22 with regard to a position of the source point cloud on an associated target point cloud. Such classification, which represents a first correlation in the sense of the present invention, may be a rough position of the source point cloud on the target point cloud. A rough position herein means that the number of classes of such classification is significantly lower than the total number of possible positions of the source point cloud on the target point cloud, preferably lower than 20, more preferably lower than 8, such as to achieve a good balance between prediction accuracy of the AI system and processing time. Even a classification with only 2 classes, for example "left part of the object" and "right part of the object", has been found to achieve very good results as will be shown further below. Other classification schemes regarding the position of the source point cloud with respect to the target point cloud may comprise four classes, for example "upper left", "lower left", "upper right" and "lower right".

AI system 22 therefore provides a predicted classification of the position of the source point cloud on the target point cloud. The predicted classification result output by AI system 22 may be provided as the first correlation to a target point cloud cropping unit 24, which receives the target point cloud from target data processing unit 20 as a second input. Based on the first correlation, the target point cloud cropping unit 24 may crop the target point cloud and generate a cropped target point cloud which only includes those points of the original target point cloud which are within or near the predicted position of the source point cloud. In particular, within a target area defined by the outer circumference of the target point cloud, target point cloud cropping unit 24 may define a crop region which corresponds to the outer circumference of the source point cloud when the source point cloud is positioned on the target point cloud according to the first correlation, i.e. according to the rough position as classified by AI system 22.

The cropped target point cloud may then be passed from target point cloud cropping unit 24 to a point cloud registration unit 26. Point cloud registration unit 26 may further receive source data from source data processing unit 18, in particular a copy of the source point cloud. Point cloud registration unit 26 may then use any point cloud registration algorithm, including conventional point cloud registration algorithms, preferably an algorithm based on feature matching as known as such in the prior art (see for example Robu et al. as cited above). Further, a random sample consensus (RANSAC, Fischler et al., as cited above) approach may be used as a feature matching algorithm, which is an iterative method that randomly samples points from the source point cloud and the target point cloud and aims to match these points to find most likely corresponding points between the two point clouds.

The result of the point cloud registration and the output of point cloud registration unit 26 may be the description of a spatial transformation between at least a portion of the source point cloud and a portion of the target point cloud, for example a transformation matrix. Such transformation forms a second correlation in the sense of the present invention.

Computing device 14 of the present embodiment further includes a data fusion unit 28, which receives the second correlation as a first input. Furthermore, data fusion unit 28 receives source data, for example a copy of the source point cloud, from source data processing unit 18 as a second input and target information, for example a copy of the target point cloud or a portion thereof, from target data processing unit 20 as a third input. Based on the second correlation, data fusion unit 28 may then generate a fused image, in which source data and target information are overlaid on one another. More specifically, for correctly positioning source data and target information relative to one another within the fused image, data fusion unit 28 may apply the transformation according to the second correlation to either the target information or the source data. In one example, the source data may be identical or nearly identical to the camera image provided by camera 12 and the target information may be an image as obtained from the alternative imaging modality, wherein both images are matched to one another in position, orientation, size and shape, such as to align corresponding points that correspond to the same object point of the original object.

Preferably, the data fusion unit 28 provides fused images as moving images based on live images (life video images) acquired by camera 12, wherein the fused images are preferably provided in real-time or at least with a time delay that allows continuous observation of the object or relative movements between the camera 12 and the object. For example, a time delay between a first time point at which camera 12 acquires a particular image of the object and a second time point at which data fusion unit 28 fuses source data of that particular image with target information, based on a second correlation obtained from source data of that particular image, may preferably be less than 5 seconds, more preferably be less than 1 second and most preferably less than 500 milliseconds. Such a delay will either not be recognized by the user or will not significantly impede a continuous operation of the system 10.

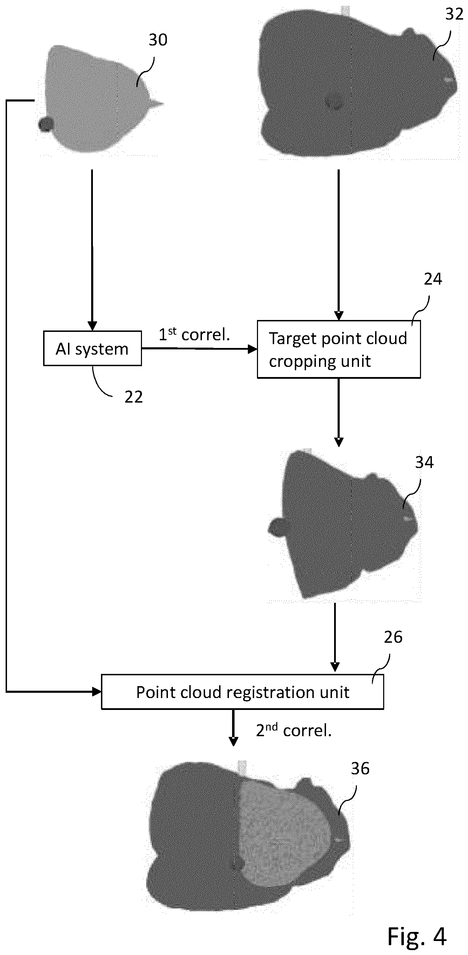

Fig. 4 illustrates an example of a source point cloud 30 and a target point cloud 32 which may be processed in system 10 according to the first embodiment of the present invention. In this example, source point cloud 30 is a two-dimensional white light image of a right part of a liver as acquired by camera 12. Target point cloud 32 is a two-dimensional image of the whole liver as obtained from a full CT or MRI scan of the liver.

AI system 22, in the present example, has been trained to recognize several parts of the liver. For example, training data used to train AI system 22 may have included a plurality of training data sets, each training data set comprising an image of a part of a liver as a source data set, an image of the entire liver as an associated target data set, and a correct classification (first correlation) indicating a rough position or area of the source point cloud on the target point cloud. After sufficient training of the AI system 22 with a plurality of different training data sets, AI system 22 is able to predict a first correlation for an unseen source point cloud. In the example shown in Fig. 4, AI system 22 thus predicts that source point cloud 30 is positioned on a right part of the liver. Consequently, target point cloud cropping unit 24 crops target point cloud 32 and provides a cropped target point cloud 34 containing only points that belong to the right part of the liver. As a result, the size of the target point cloud is reduced to roughly one half, which means that the target area which needs to be analyzed by point cloud registration unit 26 for registration with the source point cloud 30 is reduced by about one half as well.

Point cloud registration unit 26 receives source point cloud 30 and cropped target point cloud 34 and performs point cloud registration to find an exact transformation between the two point clouds 30, 34. Since the cropped target point cloud 34 is significantly reduced in size with respect to the original target point cloud 32, the processing speed of point cloud registration unit 26 can be increased correspondingly.

Based on the second correlation, a fused image 36 may then be generated by transforming both source point cloud 30 and target point cloud 32 into a common coordinate system, such that points of each cloud which correspond to the same object point will be overlaid at the same coordinate. In the fused image 36, pixels originating from the source point cloud may be displayed with different color than pixels originating from the target point cloud such that the two clouds are visually distinguishable.

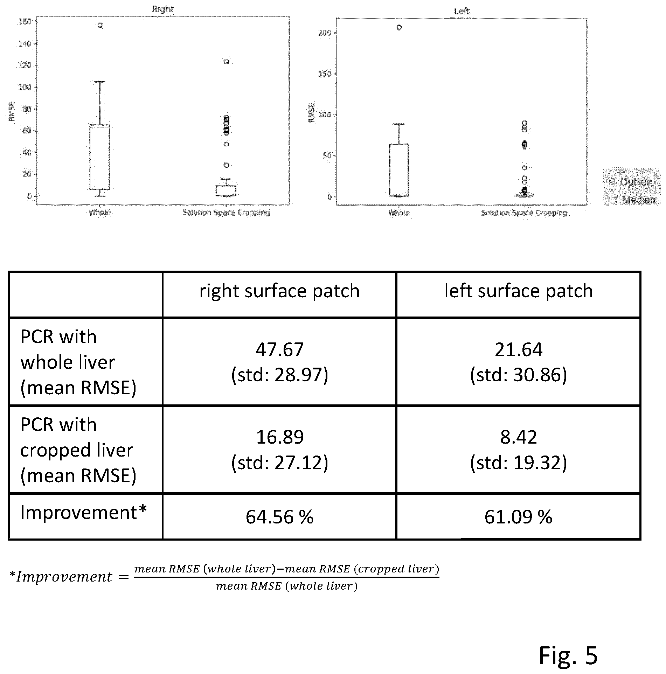

Fig. 5 shows experimental data obtained from training and testing system 10 in an example mode of operation observing a liver as an object. In this example, PointNet was used as the artificial intelligence network with a binary classification scheme, i.e. prediction of a binary position (left liver lobe versus right liver lobe) of the source point cloud on the target point cloud. The AI system 22 was trained on samples of source point clouds (n = 19,000) obtained from randomly sampled surface patches (observed object portions) located on the left and right liver lobe, respectively. After training, the trained AI system was tested by using new source point clouds (n = 4,000) obtained from images of a liver that were not used to train the network, wherein the objects had different anatomical shapes. The results obtained from the test show a 94 % true positive and only a 6 % false negative detection rate.

Furthermore, the performance of the point cloud registration according to the embodiment of the invention which uses the cropped target point cloud was measured and compared with the performance of the point cloud registration that used the same source point cloud and the original (uncropped) target point cloud as inputs. Fig. 5 shows the results of this comparison for both, left parts of the liver and right parts of the liver. It has been found that for both liver portions the root mean square error (RMSE) of the point cloud registration algorithm is significantly reduced when using cropped target point clouds instead of the original target point clouds, leading to an improvement of the mean RMSE of about 61,09 % for the left liver part and about 64,56 % for the right liver part.

It has been shown that the AI system 22 has successfully been trained to predict a position of a smaller source point cloud on a larger target point cloud, and that a predicted first correlation can be used for suitably cropping the target point cloud and thereby reducing the search space (solution space) for the point cloud registration algorithm, which leads to substantially higher and more robust registration accuracy regarding the alignment of both point clouds and/or a significant acceleration of the point cloud registration algorithm.

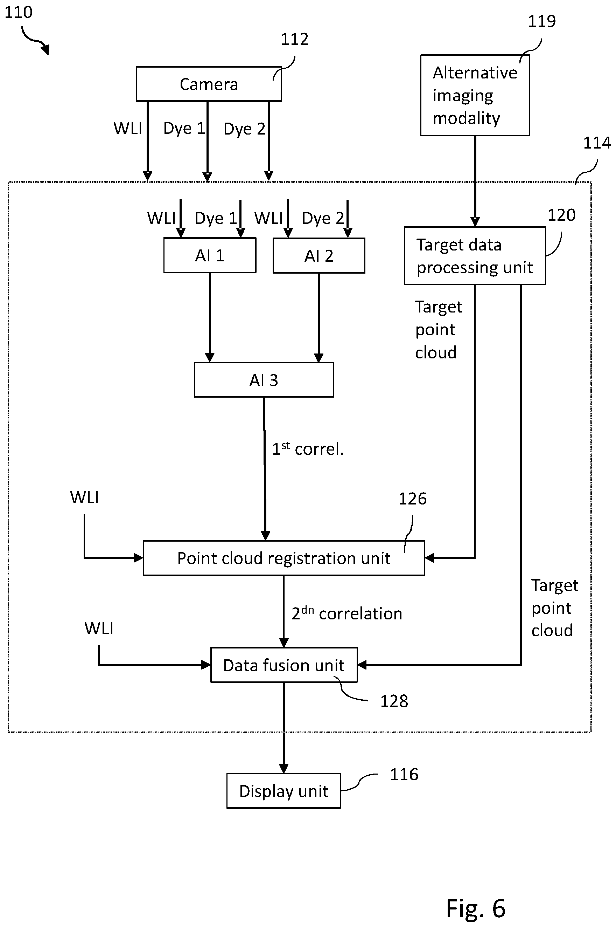

Fig. 6 shows a system 110 according to a second embodiment of the present invention, which is a modification of system 10 according to the first embodiment of the present invention described above with reference to Figs. 3 and 4. Only modifications and the differences with respect to the first embodiment will be described in more detail, and reference is made to the above description of the first embodiment for all other features and functions.

System 110 may comprise a camera 112 that includes one or more light sources for illuminating the object to be observed with light of different wavelengths. Upon illumination with white light, camera 112 may acquire a white light image (WLI). Upon illumination of the object with light of a certain color (within a narrow wavelength band of the visible light) in accordance with an excitation wavelength of a predefined first dye, camera 112 may further acquire another image (dye 1). Furthermore, camera 112 may be capable of illuminating the object with light of a second or even further colors (additional, preferably mutually distinct, wavelength bands) in accordance with excitation wavelengths of a second and/or additional dyes, upon which camera 112 may further acquire additional camera images (dye 2, ...).

Camera images WLI, dye 1 and dye 2 may be input into a computing device 114 as source data. Computing device 114 preferably is of the type as described above for computing device 14 of the first embodiment. In the second embodiment, computing device 14 may comprise a first AI system AI 1 which receives the images WLI and dye 1 as inputs and which is trained to recognize a source structure within the source data based on light reflected by the first dye. Furthermore, a second AI system AI2 may receive the images WLI and dye 2 as inputs and may be trained to recognize the same source structure or another source structure within the source data based on light reflected by the second dye. Due to the different reflection/absorption properties of the different dyes and the different interaction of the dyes with the object (such as reactions with portions of the object of movement through the object), the use of different dyes may add information regarding one or more source structures within the object, such as vessels or regions where vessels meet, thus increasing accuracy and robustness of the structure recognition as compared to a structure recognition based on just the white light image.

The source structure identified within the source data may then be passed to a third artificial intelligence system AI 3, which includes a machine learning network trained to recognize the source structure as corresponding to a particular target structure within the target point cloud. For this purpose, AI 3 may be trained using a supervised training algorithm with a plurality of training data sets, wherein each training data set includes a definition of a sample source structure as well as an indication (classification) of a presence and/or a position of the sample source structure within the target point cloud. After training, AI 3 is capable of predicting whether or not a new, unseen source structure is present within a target point cloud at a certain position or within a certain region of the target point cloud.

Such information about the presence and/or location of the source structure forms a first correlation in the sense of the present invention and will be provided to a point cloud registration unit 126 of computing device 114. More specifically, point cloud registration unit 126 receives, as inputs, the source data, in particular the white light image captured by camera 112, and target data, in particular the target point cloud obtained from an alternative imaging modality 119, as well as the first correlation, and calculates a second correlation between the source data and the target data which represents a transformation between points of the source data and points of the target data. The calculation of the transformation may be based on any suitable PCR algorithm as described above for the first embodiment.

According to the second embodiment, PCR calculation is assisted by the first correlation which provides information about a structure present within the source data. Further, same structure or corresponding features may be present in the target data as well. In any case, by structure recognition as described above, the solution space for the point cloud registration algorithm, in particular the number of point pairs to be taken into account within the feature matching algorithm, can be significantly reduced, for example by taking into account only such point, or predominantly such points, that belong to the detected structure. In other words, based on the prediction made by the AI system, it is possible to estimate promising candidate sample points within the source point cloud and/or the target point cloud, and to limit the feature matching (for example the Random Sample Consensus) to those sample candidate points. Consequently, effectiveness of the point cloud registration unit can be increased, the feature matching results can be improved, and more robust and more efficient registration can be achieved. In particular, due to the increase of processing speed of the point cloud registration unit 126, real-time processing of the source data becomes possible such as to allow the display unit 116 to display a continuous video image according to the live image acquired by camera 112 and to enrich the video image continuously by associated target information, wherein a delay of the processing is small enough to either not be noticeable or not impede continuous operation by the user (the delay time is preferably smaller than 5 seconds, more preferably smaller than 1 second, even more preferably smaller than 500 milliseconds).

Display unit 116 may be an augmented reality device as described above with respect to display unit 16 of the first embodiment.

## Claims

1. Method for processing image data, comprising the steps of
- providing source data from images acquired by a camera viewing an object,
- providing target data related to the object,
- operating an AI system comprising at least one artificial neural network, wherein the source data are used as an input of the AI system, and wherein the AI system is trained to identify a first correlation between the source data and the target data,
- processing the source data and the target data based on the first correlation to obtain a second correlation between the source data and the target data.

2. Method of claim 1, wherein the second correlation defines a spatial relation between the source data and the target data, wherein the spatial relation describes at least one spatial transformation between at least a portion of the source data and at least a portion of the target data, wherein the transformation is at least one of or a combination of a translation, a rotation, a reflection and a deformation.

3. Method of claim 1 or claim 2,
wherein the source data relate to a portion of the object observed by the camera,
wherein the target data relate to a target area which is larger than the observed portion and includes the observed portion, and
wherein the AI system is trained to identify the first correlation as describing a position of the observed portion within the target area.

4. Method of claim 3, wherein the step of processing the source data and the target data to obtain the second correlation includes
- defining a crop region within the target area, the crop region extending around the position of the observed portion, and
- processing the target data of the crop region and the source data to obtain the second correlation.

5. Method of at least one of the preceding claims, wherein the AI system is trained to recognize the presence of an object feature within at least one of the source data and the target data, and to determine positions of the object feature within both, the coordinate system of the source data and the coordinate system of the target data, wherein the object feature is a dye marking or a visible structural feature of the object.

6. Method of at least one of the preceding claims,
wherein the source data include spatial coordinates of a plurality of source points defining a source point cloud,
wherein the target data include spatial coordinates of a plurality of target points defining a target point cloud,
wherein the step of processing the source data and the target data to obtain the second correlation includes a point cloud registration which estimates a transformation matrix between at least a portion of the source point cloud and at least a portion of the target point cloud, the point cloud registration preferably using a feature matching algorithm.

7. Method of at least one of the preceding claims, wherein the target data are obtained from an imaging modality applied to the object, in particular Computer Tomography (CT) and/or Magnetic Resonance Imaging (MRI).

8. Method of at least one of the preceding claims, wherein the source data and the target data are processed for two-dimensional or three-dimensional display such as to be viewed by a user, preferably by using an augmented reality device, wherein the source data and the target data are preferably displayed as being overlaid onto one another based on the second correlation.

9. System for processing image data, comprising:
- a camera adapted to acquire images of an object,
- a source data processing unit adapted to provide source data based on the images acquired by the camera,
- a target data processing unit adapted to provide target data related to the object,
- an AI system adapted to accept the source data as input, wherein the AI system comprises at least one artificial neural network trained to identify a first correlation between the source data and the target data,
- a registration unit adapted to process the source data and the target data based on the first correlation to obtain a second correlation between the source data and the target data.

10. System according to claim 9, wherein the registration unit is adapted to determine a transformation between at least a portion of the source data and at least a portion of the target data, wherein the transformation is at least one of or a combination of a translation, a rotation, a reflection and a deformation.

11. System according to claim 9 or claim 10, further comprising a cropping unit adapted to define a crop region within the target area, the crop region extending around the position of the observed portion, and wherein the registration unit is adapted to process the source data and the target data of the crop region to obtain the second correlation.

12. System according to at least one of claims 9 to 11, further comprising a display device adapted for two-dimensional or three-dimensional display of the source data and the target data such as to be viewed by a user, wherein the display device is adapted to display the source data and the target data as being overlaid onto one another based on the second correlation, wherein the display device preferably comprises an augmented reality device adapted for real-time display of the source data according to the images acquired by the camera, wherein the augmented reality device is preferably further adapted for real-time display of target information obtained from the target data as being overlaid onto the source data.

13. System of at least one of claims 9 to 12, wherein the system is an endoscope imaging system, and wherein the camera is an endoscope camera adapted to be mounted to an endoscope.

14. Computer program product configured to carry out, when run on a computer, a method according to at least one of claims 1 to 8.

15. Method for training an AI system comprising at least one artificial neural network, wherein the method comprises the steps of:
- providing a plurality of different training data sets, each training data set comprising a source data set obtained from at least one image acquired by a camera viewing an object, a target data set related to the object, and a first correlation between the source data set and the target data set,
- training the AI system by inputting the training data sets into the AI system.
